# EUROPEAN PATENT SPECIFICATION

(11) **EP 3 730 787 B1**
(45) Date of publication and mention of the grant of the patent: **24.12.2025**
(21) Application number: 19170851.0
(22) Date of filing: 24.04.2019
(51) Int. Cl.: F04B 27/18, F04B 49/06

(54) **CONTROL DEVICE FOR A COMPRESSOR, A COMPRESSOR WITH THE SAME, AND AN AIR CONDITIONING SYSTEM INCLUDING CONTROL DEVICE AND COMPRESSOR**
STEUERUNGSVORRICHTUNG FÜR EINEN KOMPRESSOR, KOMPRESSOR DAMIT SOWIE EIN KLIMATISIERUNGSSYSTEM MIT DER STEUERUNGSVORRICHTUNG UND DEM KOMPRESSOR
DISPOSITIF DE COMMANDE POUR COMPRESSEUR, COMPRESSEUR LE COMPRENANT ET SYSTÈME DE CONDITIONNEMENT D'AIR COMPRENANT LE DISPOSITIF DE COMMANDE ET LE COMPRESSEUR

(43) Date of publication of application: 28.10.2020
(73) Proprietor: TE Connectivity Germany GmbH, 64625 Bensheim (DE); Hanon Systems, Daejeon (KR)
(72) Inventor: ZAWADZKY, Peter Kurt, 67304 Kerzenheim (DE); SCHERNER, Simon, 67346 Speyer (DE); DOMKE, Daniel, 67227 Frankenthal (DE); KWAK, Jung Myung, Daedeok-gu, Daejeon, (KR); KIM, Yong Hee, Daedeok-gu, Daejeon, (KR)
(74) Representative: Meissner Bolte Partnerschaft mbB

(56) References cited:
- US-A- 6 038 871
- US-A1- 2010 175 401
- US-A1- 2010 260 619
- US-A1- 2011 182 753
- US-A1- 2013 074 526
- US-B1- 6 247 900

## Description

The present application relates to a compressor control module for controlling the operation of a variable displacement swash plate compressor, a variable displacement swash plate compressor including the compressor control module, and an air conditioning system.

In general, air-conditioning systems for vehicles are equipped with a refrigerant compression cycle system for cooling and/or heating. The heart of the refrigerant compression cycle is a compressor that compresses and circulates refrigerant in the refrigerant cycle. The compressor is typically configured to keep the pressure in the evaporator at a low level. The pressure in the evaporator directly relates to the temperature of saturated refrigerant throttled into the evaporator, and hence, by keeping the pressure low, the compressor keeps the temperature low in the evaporator.

The variable displacement swash plate type compressor is popular for vehicle air-condition systems. The variable displacement swash plate compressor is typically driven by a belt driven by the vehicle engine. The compressor output (such as compressor load or compressor work done on fluid) can be adjusted by shifting an angle of a swash plate.

The variable displacement swash plate compressor is configured so that a rotating swash plate's inclination angle affects the reciprocation length of compression pistons. The inclination angle of the swash plate, in turn, is typically regulated by varying a pressure difference between a crank chamber of the variable displacement swash plate compressor and suction chamber thereof. That is, when the pressure in the crank chamber is increased by directing high-pressure working fluid from the discharge chamber to the crank chamber, the pressure difference between the crank chamber and the suction chamber (Pc - Ps) increases, and the swash plate angle decreases (i.e. is moved perpendicular to a main shaft), so the stroke of the piston is reduced. Accordingly, when the pressure in the crank chamber is decreased, the swash plate angle is increased and the stroke of the piston is increased, leading to increased compressor mass flow rate.

The crank chamber of the variable displacement swash plate compressors in the prior art is in constant communication with the suction chamber via a fixed orifice, often termed "bleed port". With a control valve closing the passage between the crank chamber and the discharge chamber, the pressure in the crank chamber, due to the bleed port, decrease until it reaches the pressure in the suction chamber. This will increase the inclination angle of the swash plate to maximum, and consequently, the strokes of the pistons, increasing the compressor mass flow.

The prior art control of swash plate angle is done by regulating the flow of the high-pressure working fluid from the discharge chamber to the crank chamber.

Mainly the pressure difference between the resulting crank case pressure and suction pressure (Pc-Ps) defines the swash plate angle.

This configuration of the prior art is well known and simple but has disadvantages. The bleed port between suction chamber and the crank chamber leads to pressure losses that could otherwise be used for cooling.

Another disadvantage is that the prior art control tends to be unstable in certain conditions.

The electronic control valve used by a so-called "externally controlled variable compressor" typically includes an actuating rod driven by an electronic actuator such as a solenoid. The actuating rod moves valve bodies, depending upon the turning on/off of the solenoid. The externally controlled variable compressor can adjust the temperature at the outlet of an evaporator, preferably within a range of up to 12 °C. By adjusting the temperature in the evaporator, the AC system can be optimized for cooling load, leading to more efficient cooling, and reduced power consumption.

Further, since the electrical control valve in some embodiments may control the swash plate to be perpendicular to the main shaft, setting the compressor output/load to a minimum, the mechanism for otherwise turning the compressor on/off (usually a clutch) can be dispensed with, simplifying the construction and reducing manufacturing costs.

The prior art typically involves an open-loop regulation of the suction pressure. A Heating Ventilation and Air Conditioning (HVAC) system sets a desired suction pressure for the compressor. The desired suction pressure is translated into a certain drive signal for the electronic control valve of the compressor which sets the swash plate position, and hence the compressor output/load. The suction pressure is typically not measured. The HVAC control only uses vehicle cabin temperature and evaporator air outlet temperature as control values. The construction is mostly stable but due to the suction pressure not being measured, there is no feedback that the actual suction pressure is achieved. The system is hence prone to static errors and hysteresis effects due to friction.

US 2010/0175401 A1 relates to a discharge displacement control system for a variable displacement compressor that includes controlled object setting means. The controlled object setting means selects a control mode out of two or more control modes in accordance with external information detected by external information detection means, and sets a controlled object matching the selected control mode. In accordance with the external information detected by the external information detection means, the controlled object setting means sets, as the controlled object, a target pressure for one of a pressure in a suction pressure region and a pressure in a crank chamber in a first control mode, which is one of the control modes, and a target working pressure difference between a pressure in a discharge pressure region and one of the pressure in the suction pressure region and the pressure in the crank chamber in a second control mode, which is another of the control modes. The control system of this document is not configured to determine an upper threshold and a lower threshold of the pressure difference between the crank chamber pressure and suction pressure in real time from the current piston stroke length, the crank chamber pressure and suction pressure.

US 6,247,900 B1 relates to a sensing apparatus for a swash or wobble plate compressor that requires no modifications in compressor design or operation, and which provides a measure of compressor speed and stroke. The apparatus includes a sensor module and a stroke sensing circuit. The compressor has an outer housing formed of aluminum or other non-magnetic material. The sensor module includes a magnetic field responsive sensor such as a Hall Effect or magneto-resistive (MR) sensor, and is attached to the periphery of the housing in proximity to a reciprocating ferrous element such as a bushing shoe on the swash or wobble plate assembly. The sensor produces a quasi-sinusoidal output voltage signal having a frequency proportional to compressor speed, and the stroke sensing circuit determines the compressor stroke by band-pass filtering, amplifying, and peak detecting the signal.

US 2013/0074526 A1 relates to a method for controlling transitions between activating and deactivating a vehicle air conditioner compressor in which displacement of the air conditioner compressor is adjusted before the air conditioner is coupled to an energy conversion device.

The present application is a continuation of the invention disclosed in Korean Patent Application KR 10-2018-0010891 and discloses a compressor control module (CCM) to further improve the regulation of a compressor in which the suction pressure can be regulated according to the cooling effect needed.

The disclosure includes a first communication passage (termed "P1" in KR 10-2018-0010891) connecting a suction chamber and a crank chamber of the variable displacement swash plate compressor, and a second communication passage (termed "P2" in KR 10-2018-0010891) connecting a discharge chamber and a crank chamber of the variable displacement swash plate compressor. It further discloses a 4-way control valve for selectively opening and closing the first communication passage and the second communication passage, so that the bleed port can be closed, or substantially closed.

By allowing pressure to be regulated in both directions, the bleed port can be reduced or closed, substantially improving efficiency. However, closing the bleed port makes the system less stable and small variation of control valve opening may lead to large change in swash plate angle. Closing or substantially closing the bleed port improves efficiency but makes the system complex to control. This invention describes a solution how to precisely control a compressor where the bleed port is closed or substantially reduced.

The object is solved by the compressor control module (CCM) of claim 1, the variable displacement swash plate compressor of claim 10, and the air conditioning system of claim 14.

The advantages include precise control of a compressor where the bleed port is closed or substantially reduced.

The controller parameters of one or more of the controllers might advantageously be adjusted during operation. This may be depending on certain system variables (such as Ps, piston stroke length, RPM, Pd, evaporator air outlet temperature, humidity, etc.).

In one embodiment, the compressor control module, CCM, is adapted to repeat the steps a) to f) until the current output of the variable displacement swash plate compressor becomes closer to, or is the same as the desired or required output from a); and
wherein the CCM is preferably adapted to perform step a) to f) in the order given.

In one embodiment, the CCM is further adapted to manipulate the desired or required output of the variable displacement swash plate compressor received in step a), based on one or more of the values received in c) and/or d).

For step a), the CCM may be adapted to receive a desired or required output of the variable displacement swash plate compressor (control target value) and to manipulate this value based on one or more of the values received in c) and /or d).

In one embodiment, an upper and/or lower threshold difference between the crank chamber pressure, and suction pressure difference (Pc - Ps), wherein exceeding the upper threshold results in an swash plate (SWP) angle increase and wherein undershooting the lower threshold results in SWP angle decrease, is stored while the derivative of piston stroke length is different from zero, or different from a certain tolerance band around zero; and
wherein the upper and / or lower threshold difference, or a function of the upper and / or lower threshold difference is used for precise SWP angle control.

In one embodiment, the compressor rotation speed and / or its derivatives is fed forward to the CCM in order to adjust the input and/or the output of one and/or more than one controller loops to improve dynamic behavior in case of compressor RPM changes.

In one embodiment, the signal to the valve driving unit is at least in part generated from an output of a Model Predictive Control (MPC), IMC, online predictive controller like neural network, and/or Multi-Input-Single-Output (MISO) controller.

In one embodiment, the signal to the valve driving unit is at least in part generated from an output of a PID controller, wherein the determined difference in step e) is preferably an input signal to the PID controller.

In one embodiment, at least one gain parameter of the PID controller is at least in part adjusted based on one or more measured or calculated values of the compressor, such as suction chamber pressure and / or discharge chamber pressure and / or piston stroke length and / or piston reciprocating frequency and / or opening level of the control valve.

In one embodiment, when the suction chamber pressure is low, the P-parameter and / or I-parameter and / or D-parameter is lower compared to when the suction chamber pressure is higher; and / or
when the discharge chamber pressure is high, the P-parameter and / or I-parameter and / or D-parameter is lower compared to when discharge chamber pressure is lower; and / or
when the piston stroke length is low, the P-parameter and / or I-parameter and / or D-parameter is higher compared to when piston stroke length is higher.

In one embodiment, the CCM is an integral part of the variable displacement swash plate compressor.

In one embodiment, the variable displacement swash plate compressor does not comprise a bleed port or bleed valve between any of the suction chambers and crank chamber or comprise a bleed port with reduced diameter.

In one embodiment, the variable displacement swash plate compressor comprises at least one speed-stroke sensor, wherein the speed-stroke sensor might be adapted to monitor the amount of piston stroke length and reciprocating speed of one, or more, of the pistons of the variable displacement swash plate compressor and send this measurement to the CCM, wherein the CCM is adapted, on the basis of the amount of travel of the one of more pistons, to calculate the current angle of the swash plate and / or the piston stroke length of the variable displacement swash plate compressor and on the basis of the reciprocating speed of piston to calculate the swash plate and the compressor rotational speed (RPM).

In one embodiment, the variable displacement swash plate compressor comprises an electronic control valve which is connected to the CCM and is adapted, in response to reception of the output signal from the CCM at step f), to direct pressure from the crank chamber to one or more of the suction chambers or from a discharge chamber to the crank chamber of the variable displacement swash plate compressor, thereby to change the angle of the swash plate.

In one embodiment, the variable displacement swash plate compressor is part of an air conditioning system.

In one embodiment, the air conditioning system is used in an automobile, wherein further
the CCM or the air conditioning system is adapted to operate to ensure that the temperature in the cabin of the automobile is maintained at the desired, or set, temperature by the users of the automobile by controlling the suction pressure or the output of coolant of the variable displacement swash plate compressor.

In one embodiment, the desired output of the variable displacement swash plate compressor is an amount of work done on coolant, and which remains constant irrespective of the driving force and rotation speed of the variable displacement swash plate compressor.

For the calculation of the target value, other external signals may be taken into account, like outside air conditions (such as temperature and humidity), sun load on the vehicle, and target and actual value of the evaporator air outlet temperature.

The variable displacement swash plate compressor might not comprise a bleed port or bleed valve between any of the suction chambers and crank chamber, or at least comprises a bleed port or bleed valve with reduced diameter.

By removing the bleed port or bleed valve or reducing its diameter, the efficiency of the compressor is increased due to reduction of inner pressure loss and hence fuel can be saved.

The signal output from the CCM at step f) might cause the variable displacement swash plate compressor to change the pressure in the crank chamber in order to change the angle of the swash plate , thereby increasing or decreasing the output (such as compressor mass flow output), of the fluid from the variable displacement swash plate compressor.

The signal output from the CCM at step f) may affect the valve driving unit that drives the actuator that drives the valve body to open one of the communication passages. The first passage opens PcPs and increases the angle. The second opens PdPc to decrease the swash plate angle.

The variable displacement swash plate compressor might comprise at least one speed-stroke sensor, wherein the speed-stroke sensor might be adapted to monitor the amount of piston stroke length and reciprocating speed of one, or more, of the pistons of the variable displacement swash plate compressor and send this measurement to the CCM, wherein the CCM is adapted, on the basis of the amount of travel of the one of more pistons, to calculate the current angle of the swash plate and / or the piston stroke length of the variable displacement swash plate compressor and on the basis of the reciprocating speed of piston to calculate the swash plate and the compressor rotational speed (RPM).

The variable displacement swash plate compressor might comprise at least one crank room pressure sensor wherein the CCM is (optionally) adapted to use this information for step d).

The variable displacement swash plate compressor might comprise at least one suction pressure sensor that measures the suction pressure, wherein the CCM may be adapted to use this information for step b).

The variable displacement swash plate compressor might comprise at least one delta pressure sensor that measures the pressure difference between the crank case pressure and the suction pressure, wherein the CCM is (optionally) adapted to use this information for step d).

The CCM (or parts of the CCM control algorithms) may be integrated into an AC system controller (AC ECU). This may reduce costs.

A TXV may control evaporator superheat temperature by adjusting mass flow. The compressor controls suction pressure that may be strongly linked to the evaporator temperature.

The Control algorithm of the CCM may be located on a PCBA including a microcontroller, a valve driving unit, power supply, input units to read sensors and communication units to deliver and/or receive information to/from AC ECU and/or Engine ECU.

The above and other aspects, features and advantages of the present disclosure will be more apparent from the following detailed description taken in conjunction with the accompanying drawings, in which:
FIG. 1 is a cross-sectional view showing the internal structure of a variable displacement swash plate compressor including a first communication passage P1, a second communication passage P2, and an control valve 100;
FIG. 2 is a graph showing changes in opening level of first and second communication passages depending on movement of the valve body;
FIG. 3 shows a diagram over closed loop control according to an embodiment of the current invention.
FIG. 4 is a graph showing changes of suction pressure and opening level of valves in a process of increasing the inclination angle of a swash plate in the embodiment shown in FIG. 1;
FIG. 5 is a graph showing changes of suction pressure and opening levels of valves in a process of decreasing the inclination angle of the swash plate in the embodiment shown in FIG. 1;
FIG. 6 shows a flow chart of a method that may be used in a CCM to control the current output of a variable displacement swash plate compressor;
FIG. 7 shows control according to an embodiment of the invention.
FIG. 8 shows control according to an embodiment of the invention.
FIG. 9 shows control according to an embodiment of the invention.
FIG. 10 shows control according to an embodiment of the invention.

### DETAILED DESCRIPTION OF THE EXEMPLARY EMBODIMENTS

In order to improve controllability, a feed-forward function may be required, meaning that the compressor RPM value is used as input for the controller in order to improve the dynamic behavior in case of compressor RPM changes.

In one embodiment, the compressor RPM and / or its derivative is used as input for the feed forward function in order to adjust the target piston stroke length value, e.g. by adding or subtracting certain values.

In one embodiment, the adjustment may also take place at a different location of the control circuit, e.g. at the controller output value.

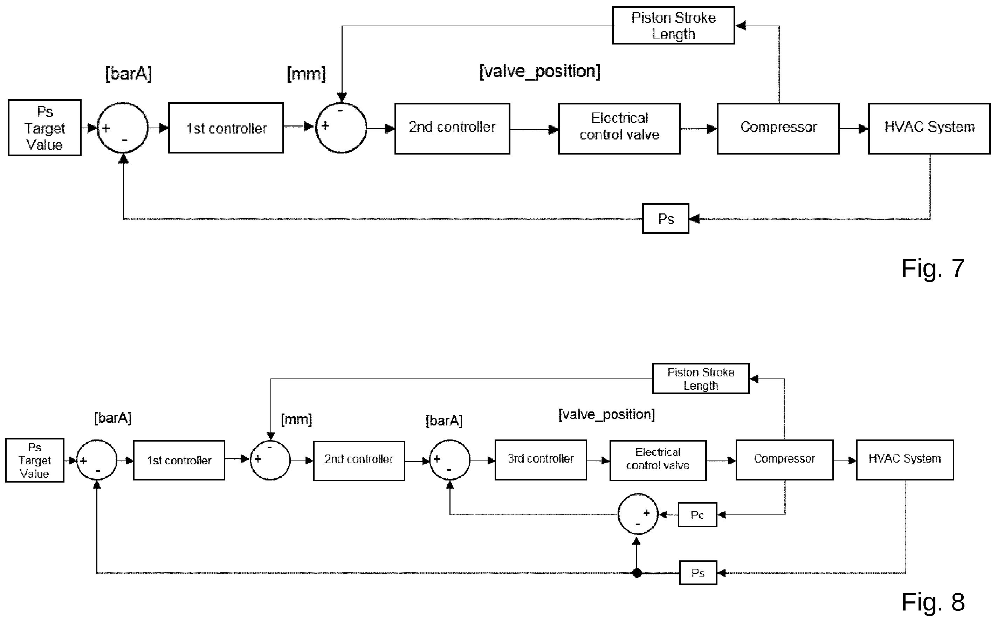

The feed forward function may also be used in relation to Fig. 7, Fig. 8, and Fig. 9 to further improve the dynamic behavior. An additional Ps information might be used to prevent icing of the evaporator.

In certain embodiments, depending on certain system variables (such as Ps, piston stroke length, RPM, Pd, evaporator air outlet temperature, humidity, etc.) it might be advantageous to adjust the controller parameters of one or more of the controllers during operation.

For example, depending on the current Ps and / or Pd and / or piston stroke length and / or opening level of the control valve, the PID parameters (proportional, integrative and differential parameters) may be adjusted. If Ps is lower, the P-parameter and / or I-parameter and / or D-parameter can be different compared to situations in which the Ps pressure is high, because for higher Ps, less control gas is sucked out of the crank room. If Pd is higher, the P-parameter and / or I-parameter and / or D-parameter can be lower compared to situations in which the Pd pressure is lower, because for higher Pd, more control gas is fet to the crank room.

If the piston stroke length is low, the P-parameter and / or I-parameter and / or D-parameter can be higher compared to higher stroke situations.

Depending on the control deviation of the outer control loop, it might be advantageous to adjust the I-parameter in order to increase the response of the controller. For example, if the control deviation is larger than a pre-defined limit, the I-Parameter can be set to larger values than for smaller control deviations.

Further, in order to improve controllability, for any embodiment described herein, a feed-forward function can be advantageous.

This is because fast RPM changes cause the Ps to either increase or decrease. Without using these RPM changes as input value for the controller, the controller response to such RPM changes is very slow, because the suction pressure response is very slow (system related). In this case, the Ps pressure logically varies, which cause increases energy consumption because of unintended ramping of the Ps level /mass flow.

The compressor RPM value is used as input for the controller in order to improve the dynamic behavior in case of compressor RPM changes.

For example, the compressor RPM and/or its derivative may be used as input for the feed forward function in order to adjust the input and/or the output of one and/or more than one controller loops.

Although exemplary embodiments were described above, the scope of the present disclosure is not limited to the specific embodiments and the present disclosure may be appropriately changed within the scope described in claims. For example, the suction pressure sensor 401 may be disposed at one of the suction chamber of the compressor, the outlet end of the evaporator, and a working fluid pipe between the evaporator and the compressor.

Although cascade control, PI, PID are mentioned in exampled, any other type or construction of control mechanism may be used by the skilled person as the case may be, such as Model Predictive Control (MPC), IMC, online predictive controller like neural network, Multi-Input-Single-Output (MISO) controller.

Hereafter, an embodiment of a compressor control module (CCM) according to the present disclosure, a variable displacement swash plate compressor with the same, and an air conditioning system comprising the CCM and the air conditioning system are described in detail with reference to the accompanying drawings.

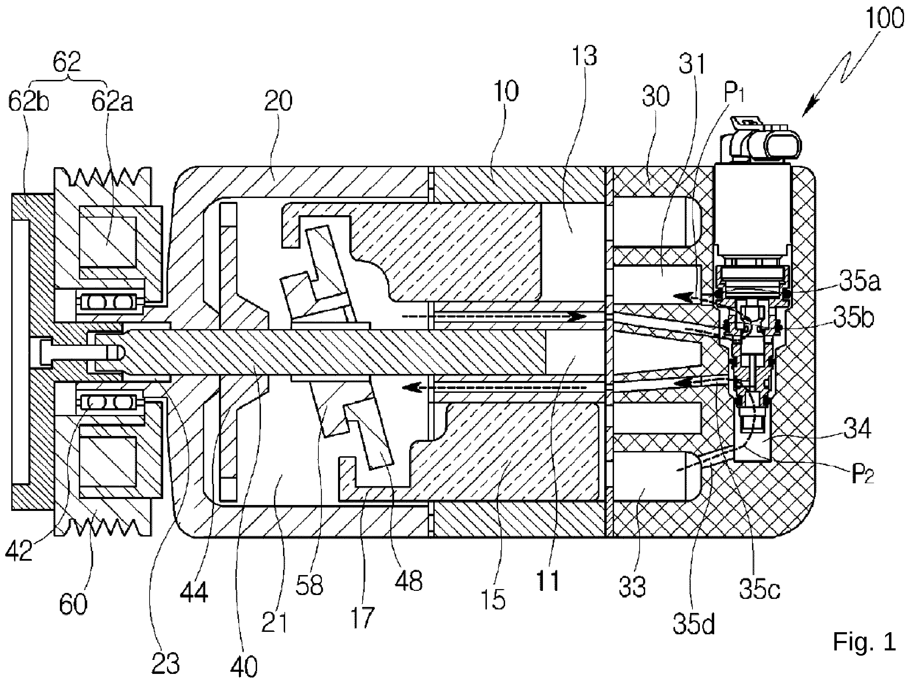

An example of a variable displacement swash plate compressor is shown in FIG. 1. The example variable displacement swash plate compressor may include, a centre bore 11, which is formed through the centre of a cylinder housing 10, and a plurality of cylinder bores 13, which are formed through a cylinder around the centre bore 11. Pistons 15 may be movably disposed in the cylinder bores 13 and compress a working fluid in the cylinder bores 13.

A front housing 20 may be coupled to an end of the cylinder housing 10. The front housing 20 may form a crank chamber 21 therein together with the cylinder housing 10. A suction chamber 31 that selectively communicates with the cylinder bores 13 may be formed in the rear housing 30. The suction chamber 31 may transmit a working fluid to be compressed into the cylinder bores 13.

A discharge chamber 33 may be formed in the rear housing 30. A 4-way control valve 100 may be disposed at a side of the rear housing 30. The control valve 100 adjusts the angle of a swash plate 48 by alternatively adjusting the opening levels of the flow path (P1) between the crank chamber 21 and the suction chamber 31 and the flow path (P2) between the discharge chamber 33 and the crank chamber 21.

A rotary shaft 40 may be rotatably disposed through the center bore 11 of the cylinder housing 10 and a shaft hole 23 of the front housing 20. The rotary shaft 40 may be rotated by power from an engine (not shown). The rotary shaft 40 may be rotatably disposed in the cylinder housing 10 and the front housing 20 by a bearing 42.

A rotor 44 having the rotary shaft 40 passing through the center thereof to integrally rotate with the rotary shaft 40 is disposed in the crank chamber 21. The rotor 44 is formed substantially in a disc shape and fixed on the rotary shaft 40 and a protrusive hinge arm (not shown) may be formed on a side the rotor 44.

The swash plate 48 may be hinged to the rotor 44 on the rotary shaft 40 to be rotated together. The swash plate 48 may be disposed such that the angle is variable with respect to the rotary shaft 40 in accordance with a discharge capacity of the compressor. That is, the swash plate 48 may be moved between a position perpendicular to the axis of the rotary shaft 40 and a position inclined at a predetermined angle from the rotary shaft 40. The swash plate 48 may be connected at the edge to the pistons 15 through a shoe (not shown). That is, the edge of the swash plate 48 is connected to connecting portions 17 of the pistons 15 through a shoe so that the pistons 15 are reciprocated in the cylinder bores 13 by rotation of the swash plate 48.

A half-tilting spring (not shown) providing elasticity may be disposed between the rotor 44 and the swash plate 48. The half-tilting spring may be disposed around the outer side of the rotary shaft 40 and provides elasticity such that the inclination angle of the swash plate 48 decreases.

In Fig. 1, a path connecting the crank chamber 21 and the suction chamber 31 is defined as a first communication passage P1 and a path connecting to the discharge chamber 33 and the crank chamber 21 is defined as a second communication passage P2. The passages are indicated by arrows in FIG. 1, and a working fluid flows in the directions indicated by the arrows due to a pressure difference among the suction chamber, crank chamber, and discharge chamber.

When the first communication passage P1 is opened, the crank chamber and the suction chamber communicate with each other, so the pressure in the crank chamber decreases. Accordingly, the inclination angle of the swash plate is increased, and consequently, the strokes of the pistons are increased. Further, when the second communication passage P2 is opened, the crank chamber and the discharge chamber communicate with each other, so the pressure in the crank chamber is increased. Accordingly, the inclination angle of the swash plate is decreased and the strokes of the pistons are decreased.

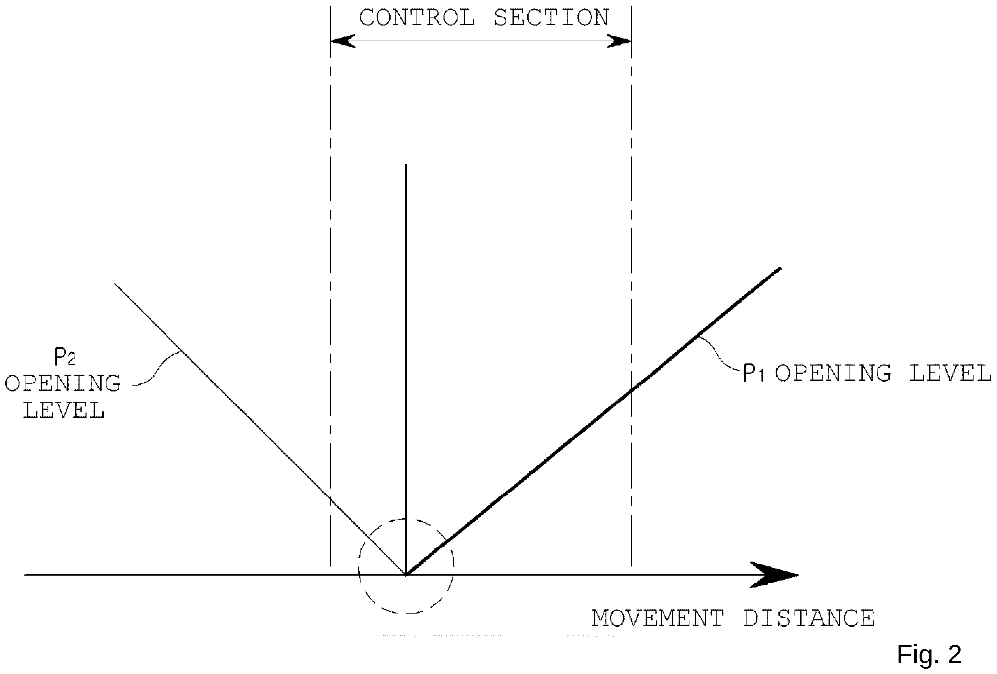

Referring to FIG. 2, the transverse axis shows the movement distance of a valve body of the 4-way control valve and the longitudinal axis shows the opening levels of the first communication passages (P1) and second communication (P2).

It is shown in the left area that as the valve body is moved down, the second communication passage P2 is gradually close until it is completely closed. It is shown in the right area that as the valve body is moved down, the first communication passage P1 is gradually opened. A section in which opening and closing of the first and second communication passages are reversed appears in an area around the origin, and it should be noted that there is preferably no section in which the two communication passages are both open since this would lead to substantial leak of refrigeration fluid via the crank chamber. To facilitate control, it may also be possible to not completely close the bleed-port. This will result in both passages a little bit opened at the same time. This increases controllability.

In the embodiment, the control valve does not use the entire section shown in FIG. 2, but is operated in the area indicated as a 'control section'. Depending on leak from discharge chamber to crank chamber over the pistons, most of the control section is positioned at the section in which the opening/closing of the first communication passage P1 is adjusted. This is in contrast to the prior art, where control is done by opening a channel between the discharge chamber and the crank chamber.

The control of the control valve may be targeted at achieving a certain suction chamber pressure requested by the HVAC system. In order to improve the precision of achieved suction pressure with the bleed port closed, a pressure sensor may be included on the evaporator side of the refrigeration cycle, preferably in the suction chamber of the compressor. The sensor measures the suction pressure. A control unit including a controller (such as a PI/PID controller) may further be included and configured to adjust the control valve so as to close the gap between target and actual suction pressure. Feedback from suction pressure in closed loop increases stability and accuracy of the suction pressure control. However, the rather long delay in the refrigeration cycle may lead to controllability issues and make the control complex.

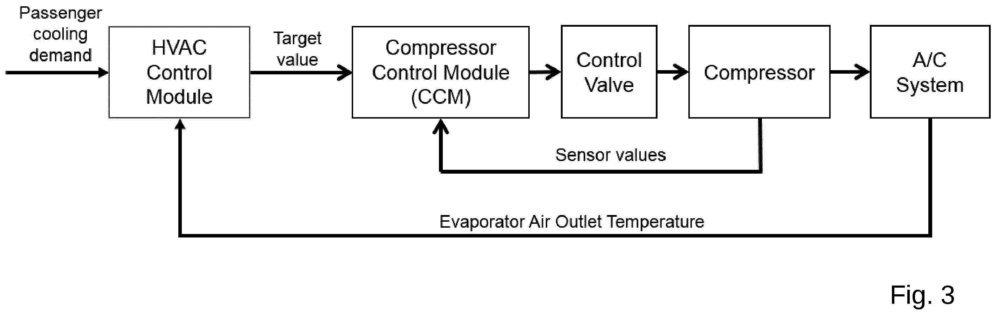

As shown in FIG. 3, the Compressor Control Module (CCM) may be part of a vehicle Heating Ventilation and Air Conditioning (HVAC) system.

Passenger cooling demand may be received by the HVAC Control Module. The HVAC Control Module, in turn provides target value to the CCM, which controls the control valve of the compressor. Sensor values are fed back to the CCM to improve the control of the Compressor.

The Compressor may affect the pressure in the evaporator and the evaporator air outlet temperature, which may be measured and provided to the HVAC Control Module.

The feedback from measurements of the swash plate angle may be faster than feedback from suction pressure sensors. Typically, the feedback from swash plate angle may be significantly faster than feedback from sensors of suction pressure in response to compressor load changes.

The use of sensors to provide information used to calculate current swash plate position and/or compressor mass flow address problems related to the delay of the refrigeration cycle. In addition, by measuring swash plate angle, problems introduced by hysteresis, such as due to swash plate friction are significantly reduced. This leads to faster and more accurate control of the compressor.

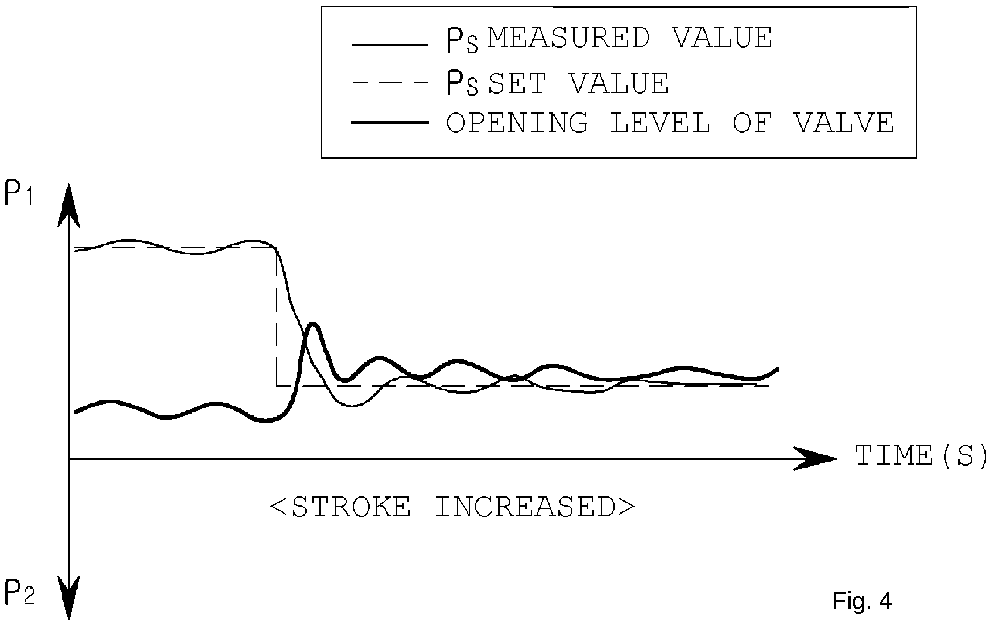

FIG. 4 is a graph showing a regulation of suction pressure and changes of opening levels of valves in response to increased cooling demand according to one embodiment of the invention. An increased cooling effect is needed due to selection by a user, or other reasons. The CCM (and/or HVAC system) determines a suction pressure at which the corresponding cooling effect is achieved and sets the target suction pressure accordingly. The target suction pressure is input to the control unit. The suction pressure set value is shown by a dotted line in FIG. 4.

The control unit then applies control input to the electrical control valve by applying a current to the electromagnetic actuator, so the opening level of the first communication passage P1 is increased. When the first communication passage P1 is increased, the crank chamber and the suction chamber communicate with each other, so the pressure in the crank chamber decreases. The inclination angle of the swash plate is increased, and consequently, the strokes of the pistons are increased. This increases the load of the compressor (assuming constant rotation speed of the swash plate) and leads to pressure decrease in the evaporation side of the refrigeration cycle. Measured suction pressure is decreased and using a control algorithm of the controller, the control unit is configured to adjust the input to the control valve so that the target suction pressure is kept.

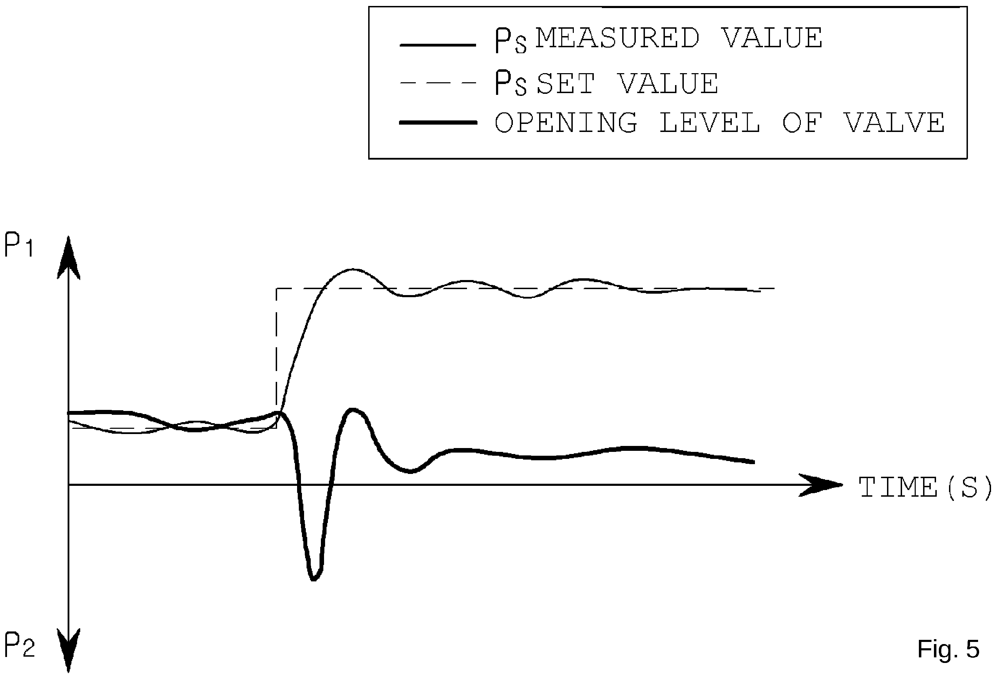

FIG. 5 is a graph showing a change of suction pressure and changes of opening levels of valves in a process of decreasing the strokes of the pistons according to one embodiment of the invention. Needed cooling is decreased, due to selection by a user or other reasons. In order to decrease cooling the stroke length of the pistons may be decreased, as described above. To this end, the control unit (such as the AC ECU) determines suction pressure at which the corresponding stroke can be obtained and sets the suction pressure as a target suction pressure. The suction pressure set value is shown by a dotted line in FIG. 5. When the target suction pressure value is changed into a higher value (i.e. lower cooling), the current applied to the electromagnetic actuator is decreased or blocked in accordance with an instruction from the control unit, and accordingly, the first communication passage is closed and the second communication passage is opened. When the second communication passage P2 is opened, the crank chamber and the discharge chamber communicate with each other, so the pressure in the crank chamber is increased. Accordingly, the inclination angle of the swash plate is decreased and the strokes of the pistons are decreased. The output of the compressor is decreased leading to decreased evaporator temperature.

The above relates to a solenoid actuator. The skilled person would easily adjust the invention for using a stepped actuator, or any other suitable actuator.

If P2 channel is open long enough, the pressure in the crank chamber becomes the same as the discharge pressure, so the inclination angle of the swash plate is decreased to its minimum value. Without the compressor keeping the suction pressure low, the pressure in the evaporator will increase due to heating and additional refrigerant entering via the thermal expansion valve. When the suction pressure reaches the target value a current will again be applied to the actuator in order increase the stroke lengths to maintain an appropriate suction pressure.

As seen in FIG. 4 and FIG. 5, a constant level of P1 opening level may be needed at stationary suction pressure to compensate for leak inside the cylinder into the crank room.

Example sensors providing information that can be used to calculate current compressor mass flow rate, include sensors providing information on swash plate rotation speed and angle.

Another example of sensors providing information that can be used to calculate current swash plate angle and/or compressor mass flow rate, includes sensors providing information on piston reciprocation frequency and stroke length. Current swash plate angle and/or compressor mass flow rate may be measured and/or calculated in other ways.

The swash plate rotation speed may be the same as the piston reciprocation frequency. The swash plate angle may be derived from the piston stroke length from preset data on compressor construction including the swash plate and piston structure.

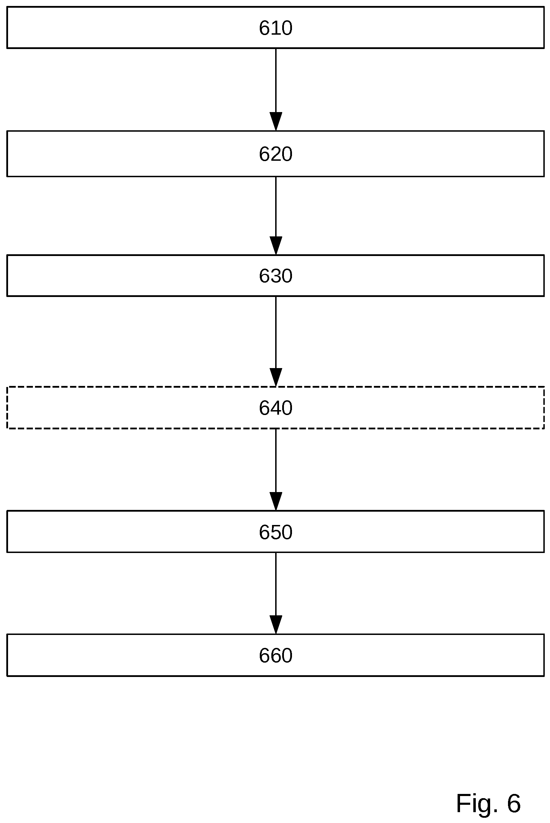

FIG. 6 depicts a flow chart of a method that may be used by the CCM to control the output (such as current compressor work) of a variable displacement swash plate compressor by:
a) either directly calculate, or receive 610 from an external source, for example the HVAC control unit, a signal indicating the desired or required output from the variable displacement swash plate compressor, for example, but not limited to, a suction pressure, an evaporator outlet air temperature, a refrigerant mass flow and/or a work done on fluid;
b) receive 620 the current / actual value of the value described in a)
c) receive or calculate 630 the current rotation speed and angle, with respect to the rotation axis, of the swash plate, or the current piston stroke length and its reciprocating frequency, respectively, of the variable displacement swash plate compressor;
d) optionally receive or calculate 640 additional current values of the compressor, the air conditioning system or from the vehicle, like the discharge pressure, the crank case pressure, the delta pressure between suction pressure and crank case pressure, the evaporator outlet air temperature, the engine speed, but not limited to,
e) determine 650 the difference between the desired or required output from the variable displacement swash plate compressor and the current output of the variable displacement swash plate compressor; and
f) output 660 a signal to the valve driving unit which will adjust the angle of the swash plate such that the actual output of the variable displacement swash plate compressor becomes closer to, or the same as, the desired or required output as obtained in step a), also taking into account the additional values received or calculated in c) and d).

The present CCM may drive the control valve to adjust pressure ratio between Pc and Ps to regulate the swash plate angle and output of the compressor in a closed loop control which may include the use of input signals from additional sensors.

In one example, the CCM contains automated control algorithms including an inner loop that is regulating the control valve actuator in order to achieve a certain swash plate angle and/or compressor discharge rate as set by an outer control loop in a cascade manner. The inner loop may be closed by input from sensors providing measurements that may be used to determine the swash plate angle or current compressor discharge rate. The delay may be relatively small compared to the delay from a suction pressure sensor, such as a delay well below one second.

One embodiment of a regulation of suction pressure with an inner loop regulating the swash plate angle is shown in FIG. 7. An inner loop may include a PID controller regulating the stroke length of the pistons. The inner control loop feedback delay time is typically well below one second.

An outer loop may include the refrigeration cycle and a PID controller regulating Ps from a target Ps set point from the HVAC control System. The inner loop may comprise a piston stroke length feedback. The outer loop may comprise a Ps sensor feedback from a pressure sensor in the suction side of the refrigeration cycle, preferably in the suction chamber of the compressor.

The delay in the outer loop is longer than in the inner loop, depending on the A/C system. The piston stroke length feedback is significantly faster than using only suction pressure measurement feedback. Measuring piston stroke length may substantially improve stability and response time of the control system. Direct piston stroke length feedback also overcomes controllability difficulties introduced by friction to swash plate movement. An incorrect position of the swash plate may be measured, and control valve levels adjusted accordingly until the correct swash plate angle is achieved.

In addition, the swash plate position can be monitored before and/or during operation and certain failure detected if the swash plate is not responding as expected to change in control valve changes.

An example CCM may also comprise a piston reciprocating speed sensor. Measurement from the piston reciprocating speed sensor may provide information on the piston reciprocation frequency to the inner and / or outer controller in a feedforward manner in order to pre-empt changes in engine rpm, allowing the control valve to be adjusted so that the stroke length compensate for the increased piston reciprocation frequency in order to keep the work load placed on the fluid constant. If the engine speed is increased suddenly, the increased compressor speed will be feedforward for example to the inner loop, and the stroke length decreased, so that a spike in compressor output is prevented. The spike would otherwise lead to torque peaks and to unnecessary cooling, and a waste of energy.

As an example, the piston reciprocation cycle frequency and the piston stroke length of pistons might be calculated by signals received from at least one speed-stroke sensor, such as speed-stroke sensor descried in European patent application 19159899.4.

Without using information on the rotation speed of the swash plate, such as the feedforward swash plate rotation speed, changes of compressor speed are only recognized by the controller after the suction pressure has changed. In such case, if the speed of the compressor is increased due a change of the engine rpm, the cooling effect of the air-conditioning system will be too high until the suction pressure has settled around the higher, desired level/value, leading to passenger discomfort and wasted energy. By sensing and responding to changes in compressor rotation speed (such as by feedforward), the CCM may react on speed variations earlier.

Examples of piston positioning sensors and piston speed sensors include eddy current sensor, cylinder pressure sensor, hall sensor, magneto-resistive sensor, capacity based sensor, and inductive based sensor.

By using the piston stroke length information, which corresponds to the swash plate angle, in an inner control circuit of a cascaded controller, the piston stroke length can be controlled directly. This significantly improves the control quality.

It is also possible to use a difference between crank chamber pressure and suction chamber pressure (Pc-Ps) value instead of the piston length information for the 2nd controlling loop.

FIG. 8 depicts control according to an embodiment of the invention. An additional sensor is included to measure crank chamber pressure. The pressure difference between crank case pressure and suction pressure (Pc-Ps) is calculated and used as actual value for the 3^{rd} controller according to Fig. 8.

In order to change the swash plate (SWP) angle, the pressure difference between Pc and Ps (Pc-Ps) needs to be below or above certain thresholds. Lower Pc-Ps pressure values increase the SWP angle, higher Pc-Ps pressure values decrease the SWP angle.

If Pc-Ps is between the upper and lower threshold, the SWP does not move at all due to static friction.

Using Pc-Ps further improves control behavior in terms of response time and control quality as Pc-Ps is directly responsible for swashplate movement.

The input to the 1st controller in Fig. 8 is a difference between the suction chamber target pressure value and the measured suction chamber pressure value (in "barA").

The output signal of the 1st controller indicates a target piston stroke length that is compared with the measured value. The difference hereof is used as input to the 2nd controller (in "mm"). The difference is used by the 2nd controller to output a target pressure delta between crank chamber and suction chamber (Pc-Ps).

This output signal of the 2nd controller is compared with the measured Pc-Ps value and the difference is used as input to the 3rd controller that regulate the electrical control valve to reach this value.

The output value of the 2nd controller, which is a Pc-Ps value, has no upper or lower limits and depends on the control deviation (input) of the 2nd controller and its control parameters.

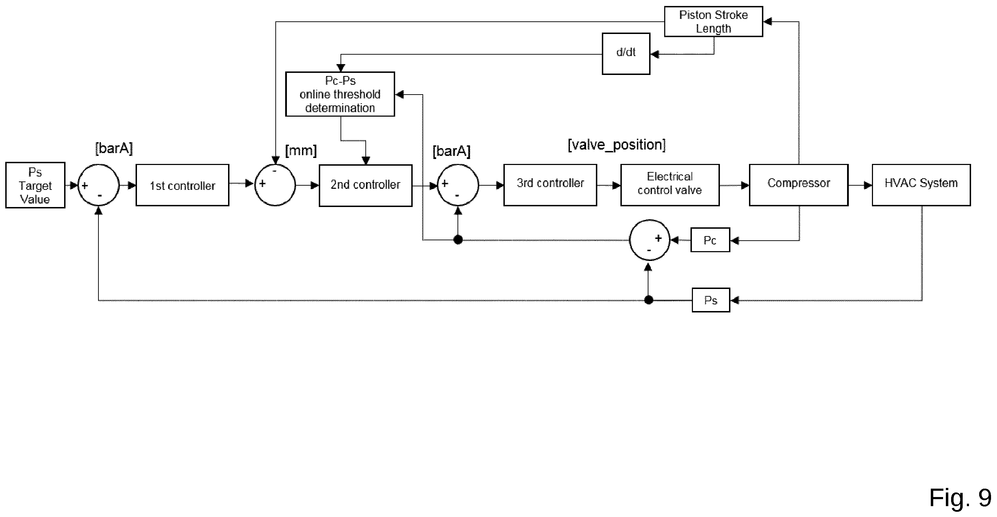

FIG. 9 depicts control according to an embodiment of the invention. As the Pc-Ps thresholds for increasing and decreasing SWP angle depend on different parameters (RPM, stroke, friction, temperature, etc.), knowledge about the accurate threshold values is an advantage.

For example, in a certain condition the controller regulates the compressor to decrease the SWP angle (by opening the PdPc passage, while the PsPc passage remains in a closed state). If there is a quite high Pd or if the PID parameters in this case have a rather large gain, the amount of control gas through the PdPc passage might be rather huge, resulting in a high Pc pressure increase and hence the Pc-Ps pressure also increases rapidly and the current Pc-Ps threshold, which might not suit the operational condition in this case, would be well overshot. The SWP angle decreases too rapidly as a result the controller needs to correct the SWP angle. In certain situations, this behavior might lead to oscillations of the swash plate angle. This problem is overcome by exactly determining the Pc-Ps thresholds during operation (online/in real time).

By measuring the piston stroke length (which relates to SWP angle) and the Pc and Ps pressure, it is possible to determine the actual Pc-Ps thresholds at the current operational state.

At the time when the SWP angle changes, meaning its derivative is different from zero, or different from a certain tolerance band around zero, the corresponding Pc-Ps value is logically either the current lower Pc-Ps threshold or the current upper Pc-Ps threshold, and is stored in a "lower threshold variable" or a "upper threshold variable".

This can be done permanently, meaning that the Pc-Ps threshold values are updated constantly. The "2nd controller" uses these thresholds for precisely controlling SWP angle movement.

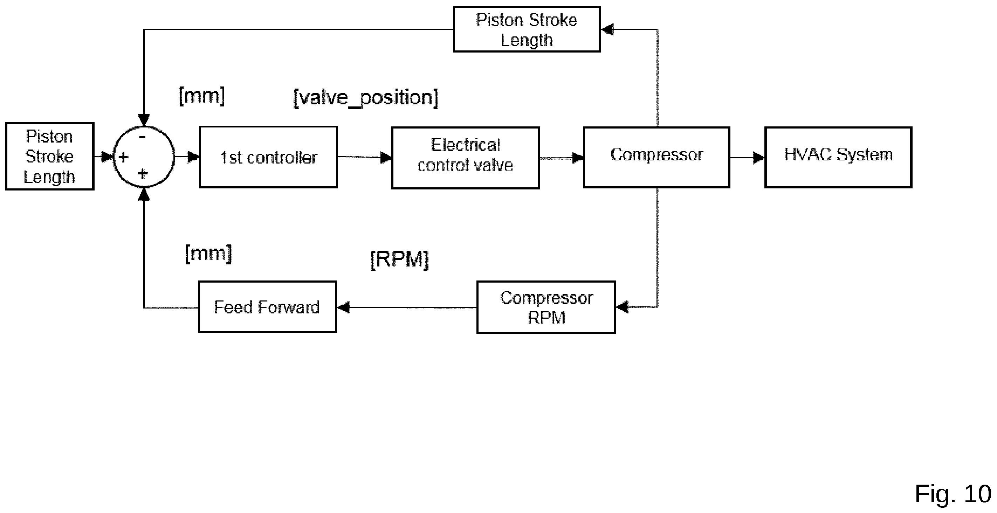

FIG. 10 depicts control according to an embodiment of the invention. The HVAC control unit provides a piston stroke length as target value for the CCM. A single controller is sufficient in this case to control the piston stroke length.

## Claims

1. A compressor control module, CCM, adapted to control an output of a variable displacement swash plate compressor, wherein the CCM comprises means for carrying out the following steps:
a) either directly calculate, or receive from an external source, for example the HVAC control unit, a signal indicating the desired or required output from the variable displacement swash plate compressor (30);
b) receive the current / actual value of the desired or required output described in a);
c) receive or calculate a current piston stroke length and a current rotation speed and angle, with respect to the rotation axis, of the swash plate (48), or a current piston stroke length and its reciprocating frequency, respectively, of the variable displacement swash plate compressor;
e) determine a difference between the desired or required output from the variable displacement swash plate compressor and the current output of the variable displacement swash plate compressor; and
f) output a signal to a valve driving unit of a control valve of the variable displacement swash plate compressor which will adjust the angle of the swash plate (48) such that the actual output of the variable displacement swash plate compressor becomes closer to, or the same as, the desired or required output as obtained in step a), also taking into account the additional values received or calculated in c);
wherein an upper threshold and a lower threshold of the pressure difference between a crank chamber pressure and suction pressure (Pc - Ps), required to move the swash plate is determined in real time from the current piston stroke length, the crank chamber pressure and the suction pressure;
wherein when the pressure difference Pc-Ps exceeds the upper threshold, the swash plate angle increases, and when the pressure difference Pc-Ps is lower than the lower threshold, the swash plate angle decreases; and
wherein the upper threshold and the lower threshold is used for swash plate angle control.

2. The CCM of claim 1, further adapted to repeat the steps a) to f) until the current output of the variable displacement swash plate compressor becomes closer to, or is the same as the desired or required output from a).

3. The CCM of claim 1 or claim 2, wherein the CCM is further adapted to manipulate the desired or required output of the variable displacement swash plate compressor received in step a), based on one or more of the values received in c).

4. The CCM of any of the previous claims for an air conditioning system of a vehicle, the CCM further comprising:
d) receive or calculate additional current values of the compressor, the air conditioning system or from the vehicle, such as discharge pressure, crank case pressure, delta pressure between suction pressure and crank case pressure, evaporator outlet air temperature, and/or engine speed;
wherein the output of the signal in step f) takes into account the additional current values received or calculated in step d).

5. The CCM of any of the previous claims, wherein compressor rotation speed and / or its derivatives is fed forward to the CCM in order to adjust the input and/or the output of one and/or more than one controller loops to improve dynamic behavior in case of compressor RPM changes.

6. The CCM of any of the previous claims,
wherein the signal to the valve driving unit is at least in part generated from an output of a Model Predictive Control, Internal Model Control, online predictive controller like neural network, and/or Multi-Input-Single-Output controller.

7. The CCM of any of the previous claims,
wherein the signal to the valve driving unit is at least in part generated from an output of a PID controller, wherein the determined difference in step e) is preferably an input signal to the PID controller.

8. The CCM of claim 7,
wherein at least one gain parameter of the PID controller is at least in part adjusted based on one or more measured or calculated values of the compressor, such as suction chamber pressure and / or discharge chamber pressure and / or piston stroke length and / or piston reciprocating frequency and / or opening level of the control valve.

9. The CCM of claim 8,
wherein when the suction chamber pressure is low, the P-parameter and / or I-parameter and / or D-parameter is lower compared to when the suction chamber pressure is higher; and / or
when the discharge chamber pressure is high, the P-parameter and / or I-parameter and / or D-parameter is lower compared to when discharge chamber pressure is lower; and / or
when the piston stroke length is low, the P-parameter and / or I-parameter and / or D-parameter is higher compared to when piston stroke length is higher.

10. A variable displacement swash plate compressor, wherein the CCM of any of the previous claims is an integral part of the variable displacement swash plate compressor.

11. The variable displacement swash plate compressor according to claim 10, wherein the variable displacement swash plate compressor does not comprise a bleed port or bleed valve between any of the suction chambers (31) and crank chamber (21) or comprise a bleed port with reduced diameter.

12. The variable displacement swash plate compressor according to claim 10 or 11, wherein the variable displacement swash plate compressor comprises at least one speed-stroke sensor, wherein the speed-stroke sensor might be adapted to monitor the amount of piston stroke length and reciprocating speed of one, or more, of the pistons of the variable displacement swash plate compressor and send this measurement to the CCM, wherein the CCM is adapted, on the basis of the amount of travel of the one of more pistons , to calculate the current angle of the swash plate and / or the piston stroke length of the variable displacement swash plate compressor and on the basis of the reciprocating speed of piston to calculate the swash plate and the compressor rotational speed (RPM).

13. The variable displacement swash plate compressor according to any of the claims 10 to 12, wherein the variable displacement swash plate compressor comprises an electronic control valve (100) which is connected to the CCM and is adapted, in response to reception of the output signal from the CCM at step f), to direct pressure from the crank chamber (21) to one or more of the suction chambers (31) or from a discharge chamber (33) to the crank chamber (21) of the variable displacement swash plate compressor, thereby to change the angle of the swash plate (48).

14. An air conditioning system comprising the variable displacement swash plate compressor of any of the claims 10 to 13.

15. The air conditioning system according to claim 14, wherein the air conditioning system is used for air conditioning a cabin of an automobile, wherein further
the CCM or the air conditioning system is adapted to operate to ensure that the temperature in the cabin of the automobile is maintained at the desired, or set, temperature by users of the automobile by controlling the suction pressure or the output of coolant of the variable displacement swash plate compressor.

16. The air conditioning system according to claim 14 or 15, wherein
the desired output of the variable displacement swash plate compressor is an amount of work done on coolant, and which remains constant irrespective of the driving force and rotation speed of the variable displacement swash plate compressor by adjusting the angle of the swash plate.

## Patentansprüche

1. Kompressorsteuerungsmodul (CCM), angepasst zur Steuerung einer Ausgabe eines Taumelscheibenkompressors mit variabler Verdrängung, wobei das CCM Mittel zur Durchführung der folgenden Schritte umfasst:
a) entweder direktes Berechnen oder Empfangen von einer externen Quelle, beispielsweise der HLK-Steuereinheit, eines Signals, das die gewünschte oder erforderliche Leistung des Taumelscheibenkompressors mit variabler Verdrängung (30) angibt;
b) Empfangen des aktuellen/tatsächlichen Werts der in a) beschriebenen gewünschten oder erforderlichen Leistung;
c) Empfangen oder Berechnen einer aktuellen Kolbenhublänge und einer aktuellen Drehgeschwindigkeit und eines aktuellen Drehwinkels in Bezug auf die Drehachse der Taumelscheibe (48) oder einer aktuellen Kolbenhublänge und ihrer Hin- und Herbewegungsfrequenz des Taumelscheibenkompressors mit variabler Verdrängung;
e) Bestimmen einer Differenz zwischen der gewünschten oder erforderlichen Leistung des Taumelscheibenkompressors mit variabler Verdrängung und der aktuellen Leistung des Taumelscheibenkompressors mit variabler Verdrängung; und
f) Ausgeben eines Signals an eine Ventilantriebseinheit eines Steuerventils des Taumelscheibenkompressors mit variabler Verdrängung, das den Winkel der Taumelscheibe (48) so einstellt, dass die tatsächliche Leistung des Taumelscheibenkompressor mit variabler Verdrängung näher an die in Schritt a) ermittelte gewünschte oder erforderliche Leistung herankommt oder die gleiche wird, wobei auch die in c) empfangenen oder berechneten zusätzlichen Werte berücksichtigt werden;
wobei ein oberer Schwellenwert und ein unterer Schwellenwert der Druckdifferenz zwischen einem Kurbelkammerdruck und einem Ansaugdruck (Pc - Ps), die zum Bewegen der Taumelscheibe erforderlich sind, in Echtzeit aus der aktuellen Kolbenhublänge, dem Kurbelkammerdruck und dem Ansaugdruck bestimmt werden;
wobei, wenn die Druckdifferenz Pc-Ps den oberen Schwellenwert überschreitet, der Taumelscheibenwinkel zunimmt, und wenn die Druckdifferenz Pc-Ps niedriger als der untere Schwellenwert ist, der Taumelscheibenwinkel abnimmt;
und
wobei der obere Schwellenwert und der untere Schwellenwert zur Taumelscheibenwinkelsteuerung verwendet werden.

2. CCM nach Anspruch 1, das ferner dazu ausgelegt ist, die Schritte a) bis f) zu wiederholen, bis die aktuelle Leistung des Taumelscheibenkompressors mit variabler Verdrängung näher an die gewünschte oder erforderliche Leistung aus a) herankommt oder die gleiche ist.

3. CCM nach Anspruch 1 oder Anspruch 2, wobei das CCM ferner dazu ausgelegt ist, die in Schritt a) empfangene gewünschte oder erforderliche Leistung des Taumelscheibenkompressors mit variabler Verdrängung basierend auf einem oder mehrerer der in c) empfangenen Werte zu manipulieren.

4. CCM nach einem der vorherigen Ansprüche für eine Klimaanlage eines Fahrzeugs, das CCM ferner umfassend:
d) Empfangen oder Berechnen zusätzlicher aktueller Werte des Kompressors, der Klimaanlage oder von dem Fahrzeug, wie z. B. Abführdruck, Kurbelgehäusedruck, Differenzdruck zwischen Ansaugdruck und Kurbelgehäusedruck, Verdampferauslasslufttemperatur und/oder Motordrehzahl;
wobei die Ausgabe des Signals in Schritt f) die in Schritt d) empfangenen oder berechneten zusätzlichen aktuellen Werte berücksichtigt.

5. CCM nach einem der vorherigen Ansprüche, wobei die Drehzahl des Kompressors und/oder deren Ableitungen an das CCM weitergeleitet werden, um die Eingabe und/oder die Ausgabe einer und/oder mehrerer Regelkreise anzupassen, um das dynamische Verhalten Im Falle von Änderungen der Kompressordrehzahl zu verbessern.

6. CCM nach einem der vorherigen Ansprüche, wobei das Signal an die Ventilantriebseinheit zumindest teilweise aus einer Ausgabe einer modellprädiktiven Regelung, Internal Model Control, einem onlineprädiktivregelungsartigen neuronalen Netzwerk und/oder eines Multi-Input-Single-Output-Reglers erzeugt wird.

7. CCM nach einem der vorherigen Ansprüche, wobei das Signal an die Ventilantriebseinheit zumindest teilweise aus einer Ausgabe eines PID-Reglers erzeugt wird, wobei die in Schritt e) ermittelte Differenz vorzugsweise ein Eingangssignal für den PID-Regler ist.

8. CCM nach Anspruch 7, wobei mindestens ein Verstärkungsparameter des PID-Reglers zumindest teilweise basierend auf einem oder mehreren gemessenen oder berechneten Werte des Kompressors, wie beispielsweise des Ansaugkammerdrucks und/oder des Abführkammerdrucks und/oder der Kolbenhublänge und/oder der Kolbenhin- und herbewegungsfrequenz und/oder des Öffnungsgrades des Steuerventils, eingestellt wird.

9. CCM nach Anspruch 8,
wobei, wenn der Ansaugkammerdruck niedrig ist, der P-Parameter und/oder I-Parameter und/oder D-Parameter niedriger ist als wenn der Ansaugkammerdruck höher ist; und/oder
wenn der Abführkammerdruck hoch ist, der P-Parameter und/oder I-Parameter und/oder D-Parameter niedriger ist als wenn der Abführkammerdruck niedriger ist; und/oder
wenn die Kolbenhublänge niedrig ist, der P-Parameter und/oder I-Parameter und/oder D-Parameter höher ist als wenn die Kolbenhublänge höher ist.

10. Taumelscheibenkompressor mit variabler Verdrängung, wobei das CCM aus einem der vorherigen Ansprüche ein integraler Bestandteil des Taumelscheibenkompressor mit variabler Verdrängung ist.

11. Taumelscheibenkompressor mit variabler Verdrängung gemäß Anspruch 10, wobei der Taumelscheibenkompressor mit variabler Verdrängung keine Entlüftungsöffnung oder kein Entlüftungsventil zwischen einem von den Ansaugkammern (31) und der Kurbelkammer (21) umfasst oder eine Entlüftungsöffnung mit reduziertem Durchmesser umfasst.

12. Taumelscheibenkompressor mit variabler Verdrängung gemäß Anspruch 10 oder 11, wobei der Taumelscheibenkompressor mit variabler Verdrängung mindestens einen Geschwindigkeit-Hub-Sensor umfasst, wobei der Geschwindigkeit-Hub-Sensor dazu ausgelegt sein kann, den Betrag der Kolbenhublänge und die Hin- und Herbewegungsgeschwindigkeit von einem oder mehreren der Kolben des Taumelscheibenkompressors mit variabler Verdrängung zu überwachen und diese Messung an das CCM zu senden, wobei das CCM ausgelegt ist, auf der Grundlage des Betrags des Wegs von dem einem oder den mehreren Kolben den aktuellen Winkel der Taumelscheibe und/oder die Kolbenhublänge des Taumelscheibenkompressors mit variabler Verdrängung zu berechnen und auf der Grundlage der Hin- und Herbewegungsgeschwindigkeit des Kolbens die Drehzahl (U/min) der Taumelscheibe und des Kompressors zu berechnen.

13. Taumelscheibenkompressor mit variabler Verdrängung gemäß einem der Ansprüche 10 bis 12, wobei der Taumelscheibenkompressor mit variabler Verdrängung ein elektronisches Steuerventil (100) umfasst, das mit dem CCM verbunden ist und so ausgelegt ist, dass es als Reaktion auf den Empfang des Ausgabesignals vom CCM in Schritt f) Druck aus der Kurbelkammer (21) zu einer oder mehreren der Ansaugkammern (31) oder von einer Abführkammer (33) zur Kurbelkammer (21) des Taumelscheibenkompressor mit variabler Verdrängung zu leiten, um dadurch den Winkel der Taumelscheibe (48) zu verändern.

14. Klimaanlage, umfassend den Taumelscheibenkompressor mit variabler Verdrängung gemäß einem der Ansprüche 10 bis 13.

15. Klimaanlage gemäß Anspruch 14, wobei die Klimaanlage zur Klimatisierung eines Fahrgastraums eines Automobils verwendet wird, wobei ferner das CCM oder die Klimaanlage ausgelegt sind so zu arbeiten, dass sie sicherstellen, dass die Temperatur im Fahrgastraum des Automobils auf der von Fahrzeugnutzern gewünschten oder eingestellten Temperatur gehalten wird, indem sie den Ansaugdruck oder die Kühlmittelabgabe des Taumelscheibenkompressors mit variabler Verdrängung steuert.

16. Klimaanlage gemäß Anspruch 14 oder 15, wobei die gewünschte Leistung des Taumelscheibenkompressors mit variabler Verdrängung eine auf das Kühlmittel ausgeübte Arbeitsmenge ist, die unabhängig von der Antriebskraft und Drehzahl des Taumelscheibenkompressors mit variabler Verdrängung durch Einstellen des Winkels der Taumelscheibe konstant bleibt.

## Revendications

1. Module de commande de compresseur, CCM, adapté à commander le débit d'un compresseur à plateau oscillant à cylindrée variable, dans lequel le CCM comprend des moyens pour exécuter les étapes suivantes :
a) soit calculer directement, soit recevoir d'une source externe, par exemple l'unité de commande CVC, un signal indiquant le débit souhaité ou requis du compresseur à plateau oscillant à cylindrée variable (30) ;
b) recevoir la valeur actuelle/réelle du débit souhaité ou requis décrit en a) ;
c) recevoir ou calculer une longueur de course de piston actuelle et une vitesse et un angle de rotation actuels, par rapport à l'axe de rotation, du plateau oscillant (48), ou une longueur de course de piston actuelle et sa fréquence de va-et-vient, respectivement, du compresseur à plateau oscillant à cylindrée variable ;
e) déterminer une différence entre le débit souhaité ou requis du compresseur à plateau oscillant à cylindrée variable et le débit actuel du compresseur à plateau oscillant à cylindrée variable ; et
f) fournir en sortie un signal vers une unité d'entraînement de soupape d'une soupape de commande du compresseur à plateau oscillant à cylindrée variable qui ajustera l'angle du plateau oscillant (48) de telle sorte que le débit réel du compresseur à plateau oscillant à cylindrée variable se rapproche ou soit égal au débit souhaité ou requis obtenu à l'étape a), en tenant également compte des valeurs supplémentaires reçues ou calculées en c) ;
dans lequel un seuil supérieur et un seuil inférieur de la différence de pression entre la pression de carter et la pression d'aspiration (Pc - Ps), nécessaire pour déplacer le plateau oscillant, sont déterminés en temps réel à partir de la longueur de course de piston actuelle, de la pression de carter et de la pression d'aspiration ;
dans lequel, lorsque la différence de pression Pc -Ps dépasse le seuil supérieur, l'angle du plateau oscillant augmente, et lorsque la différence de pression Pc - Ps est inférieure au seuil inférieur, l'angle du plateau oscillant diminue ; et
dans lequel le seuil supérieur et le seuil inférieur sont utilisés pour la commande d'angle de plateau oscillant.

2. CCM selon la revendication 1, adapté en outre à répéter les étapes a) à f) jusqu'à ce que le débit actuel du compresseur à plateau oscillant à cylindrée variable se rapproche ou soit égal au débit souhaité ou requis de l'étape a).

3. CCM selon la revendication 1 ou la revendication 2, dans lequel le CCM est en outre adapté à manipuler le débit souhaité ou requis du compresseur à plateau oscillant à cylindrée variable reçu à l'étape a), sur la base d'une ou plusieurs des valeurs reçues en c).

4. CCM selon l'une quelconque des revendications précédentes pour un système de climatisation d'un véhicule, le CCM comprenant en outre des moyens pour :
d) recevoir ou calculer des valeurs actuelles supplémentaires du compresseur, du système de climatisation ou du véhicule, telles que la pression de refoulement, la pression de carter, la différence de pression entre la pression d'aspiration et la pression de carter, la température d'air de sortie d'évaporateur et/ou le régime moteur ;
dans lequel la sortie du signal à l'étape f) prend en compte les valeurs actuelles supplémentaires reçues ou calculées à l'étape d).

5. CCM selon l'une quelconque des revendications précédentes, dans lequel la vitesse de rotation du compresseur et/ou ses dérivées sont transmises au CCM afin d'ajuster l'entrée et/ou la sortie d'une et/ou de plusieurs boucles de régulation pour améliorer le comportement dynamique en cas de variations de régime du compresseur.

6. CCM selon l'une quelconque des revendications précédentes,
dans lequel le signal vers l'unité d'entraînement de soupape est au moins en partie généré à partir d'une sortie d'un contrôleur prédictif de modèle, d'un contrôleur de modèle interne, d'un contrôleur prédictif en ligne tel qu'un réseau neuronal et/ou d'un contrôleur à entrées multiples et sortie unique.

7. CCM selon l'une quelconque des revendications précédentes,
dans lequel le signal vers l'unité d'entraînement de soupape est au moins en partie généré à partir d'une sortie d'un contrôleur PID, dans lequel la différence déterminée à l'étape e) est de préférence un signal d'entrée vers le contrôleur PID.

8. CCM selon la revendication 7,
dans lequel au moins un paramètre de gain du contrôleur PID est au moins en partie ajusté sur la base d'une ou plusieurs valeurs mesurées ou calculées du compresseur, telles que la pression de chambre d'aspiration et/ou la pression de chambre de refoulement et/ou la longueur de course de piston et/ou la fréquence de va-et-vient de piston et/ou le niveau d'ouverture de la soupape de commande.

9. CCM selon la revendication 8,
dans lequel, lorsque la pression de chambre d'aspiration est faible, le paramètre P et/ou le paramètre I et/ou le paramètre D est plus faible que lorsque la pression de chambre d'aspiration est plus élevée ; et/ou
lorsque la pression de chambre de refoulement est élevée, le paramètre P et/ou le paramètre I et/ou le paramètre D est plus faible que lorsque la pression de chambre de refoulement est plus faible ; et/ou
lorsque la longueur de course de piston est faible, le paramètre P et/ou le paramètre I et/ou le paramètre D est plus élevé que lorsque la longueur de course de piston est plus élevée.

10. Compresseur à plateau oscillant à cylindrée variable, dans lequel le CCM selon l'une quelconque des revendications précédentes fait partie intégrante du compresseur à plateau oscillant à cylindrée variable.

11. Compresseur à plateau oscillant à cylindrée variable selon la revendication 10, dans lequel le compresseur à plateau oscillant à cylindrée variable ne comprend pas d'orifice de purge ou de soupape de purge entre l'une quelconque des chambres d'aspiration (31) et le carter (21) ou comprend un orifice de purge de diamètre réduit.

12. Compresseur à plateau oscillant à cylindrée variable selon la revendication 10 ou 11, dans lequel le compresseur à plateau oscillant à cylindrée variable comprend au moins un capteur de vitesse-course, dans lequel le capteur de vitesse-course peut être adapté à surveiller la longueur de course de piston et la vitesse de va-et-vient d'un ou plusieurs des pistons du compresseur à plateau oscillant à cylindrée variable et envoyer cette mesure au CCM, le CCM étant adapté, sur la base de la course desdits un ou plusieurs pistons, à calculer l'angle actuel du plateau oscillant et/ou la longueur de course de piston du compresseur à plateau oscillant à cylindrée variable et, sur la base de la vitesse de va-et-vient du piston, à calculer la vitesse de rotation du plateau oscillant et du compresseur (tr/min).

13. Compresseur à plateau oscillant à cylindrée variable selon l'une quelconque des revendications 10 à 12, dans lequel le compresseur à plateau oscillant à cylindrée variable comprend une soupape de commande électronique (100) qui est connectée au CCM et est adaptée, en réponse à la réception du signal de sortie du CCM à l'étape f), à diriger la pression du carter (21) vers une ou plusieurs des chambres d'aspiration (31) ou d'une chambre de refoulement (33) vers le carter (21) du compresseur à plateau oscillant à cylindrée variable, modifiant ainsi l'angle du plateau oscillant (48).

14. Système de climatisation comprenant le compresseur à plateau oscillant à cylindrée variable selon l'une quelconque des revendications 10 à 13.

15. Système de climatisation selon la revendication 14, dans lequel le système de climatisation est utilisé pour climatiser l'habitacle d'une automobile, dans lequel, en outre,
le CCM ou le système de climatisation est adapté à fonctionner de manière à garantir que la température dans l'habitacle de l'automobile soit maintenue à la température souhaitée ou réglée par les utilisateurs de l'automobile en commandant la pression d'aspiration ou le débit de réfrigérant du compresseur à plateau oscillant à cylindrée variable.

16. Système de climatisation selon la revendication 14 ou 15, dans lequel
le débit souhaité du compresseur à plateau oscillant à cylindrée variable est une quantité de travail effectuée sur le réfrigérant, et qui reste constante indépendamment de la force d'entraînement et de la vitesse de rotation du compresseur à plateau oscillant à cylindrée variable en ajustant l'angle du plateau oscillant.
